# EUROPÄISCHE PATENTSCHRIFT

(11) **EP 3 448 739 B1**
(45) Veröffentlichungstag und Bekanntmachung des Hinweises auf die Patenterteilung: **28.04.2021**
(21) Anmeldenummer: 17716770.7
(22) Anmeldetag: 02.03.2017
(51) Int. Cl.: B62B 3/14, B62B 5/06

(54) **VON HAND BEWEGBARES TRANSPORTGERÄT**
TRANSPORT DEVICE MOVABLE BY HAND
APPAREIL DE TRANSPORT POUVANT ÊTRE DÉPLACÉ MANUELLEMENT

(30) Priorität: 10.03.2016 DE 202016001594 U
(43) Veröffentlichungstag der Anmeldung: 06.03.2019
(73) Patentinhaber: Eberlein, Martin, 1124 Sofia (BG)
(72) Erfinder: Eberlein, Martin, 1124 Sofia (BG)
(86) Internationale Anmeldenummer: PCT/DE2017/000055
(87) Internationale Veröffentlichungsnummer: WO 2017/152893

(56) Entgegenhaltungen:
- WO-A1-2011/161390
- GB-A- 2 312 653
- US-A1- 2004 111 320

## Beschreibung

De Erfindung betrifft ein von Hand bewegbares, mit gleichen Geräten stapelbares Transportgerät gemäß dem Oberbegriff des Anspruchs 1.

Transportgeräte mit einer ersten und mit einer zweiten Trageeinrichtung sind durch verschiedene Ausführungsbeispiele bekannt, siehe zum Beispiel das Dokument DE 297 14 128 U1. Bei diesen Transportgeräten ist eine Griffeinrichtung in Form eines quer angeordneten Schiebegriffes üblich, wobei diese Griffeinrichtung entweder an den Holmen des Fahrgestelles oder an der zweiten, also höher angeordneten Trageeinrichtung angeordnet sein kann. Ein Transportgerät mit drei Trageeinrichtungen ist beispielsweise auch in der DE 10 2009 042 287 A1 beschrieben.

Zum Stand der Technik zählt auch ein von Hand bewegbares, mit gleichen Geräten stapelbares Transportgerät in Form eines Einkaufswagens für SB-Märkte. Die Firma Wanzl GmbH in Deutschland vertreibt ein derartiges Transportgerät unter dem Namen "Scandy", bei dem auf einem Fahrgestell eine erste Trageeinrichtung in Form eines mit einer rückwärtigen Klappe ausgestatteten konischen Korbes angeordnet ist und über der ersten Trageeinrichtung eine zweite Trageeinrichtung vorgesehen ist, die an der ersten Trageeinrichtung befestigt ist. Auch diese zweite Trageeinrichtung ist konisch ausgebildet und deren Rückseite ist ebenfalls durch eine schwenkbare Klappe verschlossen. Die obere Trageeinrichtung ist geringfügig breiter als die untere Trageeinrichtung. Beide Trageeinrichtungen sind an je einem an den Längsseiten des Fahrgestelles befindlichen, nach oben strebenden Holm befestigt. Zwischen den Holmen sind zwei horizontal angeordnete Stützstreben vorgesehen, welche die beiden Trageeinrichtungen zusätzlich nach unten abstützen. Im hinteren Bereich der ersten Trageeinrichtung ist eine Schiebeeinrichtung vorgesehen, die zwei Griffeinrichtungen aufweist, welche durch einen horizontal angeordneten und quer verlaufenden, rohrförmigen Schiebegriff verbunden sind. Sowohl mit Hilfe der beiden Griffeinrichtungen als auch alternativ ausschließlich mit Hilfe des Schiebegriffs lässt sich das Transportgerät von Hand bewegen. Obwohl die erste und die zweite Trageeinrichtung so gestaltet sind, dass diese beim Stapelvorgang zweier Transportgeräte in gleiche Trageeinrichtungen eines weiteren von Hand bewegbaren Transportgerätes eingeschoben werden können, ist der erzielte Stapeleffekt deshalb unbefriedigend, weil die Gestaltung des Fahrgestelles als sehr aufwendig zu betrachten ist und Räume beansprucht, die für ein enges Stapeln nützlich wären. Der Stapelabstand zweier ineinander geschobener Transportgeräte ist deshalb relativ groß, so dass bei mehreren gleichen Transportgeräten, die zur Nutzung für Kunden bereitgestellt werden, ein enormer Platz- und Raumbedarf erforderlich ist.

In Selbstbedienungsgeschäften der Handelskette REWE werden als Sondermodelle Transportgeräte in Form von Einkaufswagen verwendet, bei denen auf den Korb dieser Transportgeräte ein weiterer kleinerer Korb aufgesetzt ist. Beide als erste und zweite Trageeinrichtung vorgesehenen Körbe sind konisch gestaltet und weisen jeweils eine schwenkbare Rückwand auf, so dass diese Transportgeräte in bekannter Weise platzsparend stapelbar sind. Die kleine zweite Trageeinrichtung ist mit Stützfüßen auf der unten befindlichen ersten Trageeinrichtung aufgesetzt, wobei die Stützfüße auf dem oberen Rand der beiden Seitenwände und auf dem hinteren oberen Rand der ersten Trageeinrichtung abgestützt sind. Das so gestaltete Transportgerät weist eine mit einem quer verlaufenden Schiebegriff ausgestattete Schiebeeinrichtung auf, die an der ersten Trageeinrichtung angeordnet ist. Die Schiebeeinrichtung ist nicht mit den Stützfüßen verbunden. Während die erste Trageeinrichtung zur Aufnahme von Einkaufsgut vorgesehen ist, bietet die zweite Trageeinrichtung die Möglichkeit, eine Babytragevorrichtung, auch "Babysafe" genannt, sicher abzustellen. Das Transportgerät ist ohne zweite Trageeinrichtung als ganz normaler Einkaufswagen verwendbar.

Das Dokument WO 2011/161390 A1 beschreibt ein von Hand bewegbares Transportgerät, dessen erste Trageeinrichtung durch zwei horizontal nach vorne sich erstreckende Stäbe gebildet und zur Aufnahme von Einkaufstaschen vorgesehen ist. Oberhalb der ersten Trageeinrichtung ist eine zweite kleinere Trageeinrichtung angeordnet, die als so genannte Babyschale ausgebildet ist. Das konische Fahrgestell dieses Transportgeräts weist rückwärtig angeordnet zwei nach oben strebende Holme auf, an deren gekrümmtem Ende jeweils ein Griffelement aufgesteckt ist und somit die Schiebeeinrichtung bilden. Auf Höhe der horizontalen Stäbe sind die beiden Holme aus Stabilitätsgründen durch zwei Querstäbe verbunden. Das so gestaltete Transportgerät ist in dieser Form funktionsfähig und kann durch das Anbringen der zweiten Trageeinrichtung funktional erweitert werden. Um dies zu ermöglichen, weist die zweite Trageeinrichtung als Befestigungsmittel zwei nach unten gerichtete Stäbe auf, die mit den beiden Querstäben verbunden sind oder verbunden werden können. Die erste Trageeinrichtung weist keine Seitenwände und auch keine schwenkbare Rückwand auf. Letztere fehlt auch bei der zweiten Trageeinrichtung. Transportgeräte dieser Art lassen sich wohl ein Stück weit ineinanderschieben, doch sind die dabei sich einstellenden Stapelabstände sehr groß, weil sich die zweiten Trageeinrichtungen von gleichen Transportgeräten nicht ineinanderschieben lassen. Fig. 4 aus diesem Dokument stützt diese Feststellung.

Im Dokument US 2004/0111320 A1 wird ein Transportgerät beschrieben, das ebenfalls als Einkaufswagen gestaltet ist und eine erste Trageeinrichtung in Form eines für die Aufnahme von Einkaufsgut bestimmten Korbes aufweist. Die zweite Trageeinrichtung ist durch eine an der ersten Trageeinrichtung befestigte Schiebeeinrichtung gebildet, die ein elektronisches Display trägt. Die derart gestaltete zweite Trageeinrichtung ist mittels zweier Aufstecktaschen zu beiden Seiten an Drahtschlaufen der ersten Trageeinrichtung aufgesteckt. Die zweite Trageeinrichtung lässt sich mit einer weiteren zweiten Trageeinrichtung eines gleichen Transportgeräts ebenfalls nicht platzsparend ineinanderschieben, so dass auch hier beim Stapeln mehrerer gleicher Transportgeräte sehr große unerwünschte Stapelabstände entstehen, siehe Fig. 11 dieses Dokuments.

Es ist Aufgabe der Erfindung, ein Transportgerät der eingangs genannten Art so weiterzuentwickeln, dass unter Verzicht auf einen quer verlaufenden Schiebegriff sowohl die beiden Griffeinrichtungen als auch die zweite Trageeinrichtung dennoch stabil genug befestigt sind, dass das Fahrgestell äußerst einfach gestaltet werden kann und dass sich gleiche Transportgeräte platzsparender als bisher bekannt, ineinander schieben lassen.

Die Lösung der Aufgabe ist im kennzeichnenden Teil des Anspruchs 1 beschrieben.

Ein erster Vorteil der aufgefundenen Lösung besteht darin, dass sich gleiche erfindungsgemäße Transportgeräte äußerst platzsparend stapeln lassen. Es wird eine überaus große Platz- und Raumersparnis erzielt wenn es gilt, mehrere Transportwagen in einer Reihe abzustellen. Durch die Befestigung der beiden Griffeinrichtungen an der zweiten Trageeinrichtung ist eine Verbindung zwischen der unteren, also ersten Trageeinrichtung und der oberen, also zweiten Trageeinrichtung geschaffen. Dadurch sind, um einen zweiten Vorteil zu nennen, keine seitlichen Holme erforderlich, welche sowohl die erste als auch die zweite Trageeinrichtung zu tragen hätten. Die beiden Griffeinrichtungen sind imstande, die zweite Trageeinrichtung alleine zu tragen. Deshalb lässt sich in vorteilhafter Weise auch die Bauhöhe der vorgeschlagenen Transportgeräte weiter reduzieren, so dass man beim Schieben eines solchen Transportgerätes genügend freie Sicht hat. Durch den Verzicht auf einen quer verlaufenden Schiebegriff stellt sich zwischen den beiden Griffeinrichtungen ein freier Zwischenraum ein, der beim Ineinanderschieben zweier gleicher Transportgeräte von der zweiten Trageeinrichtung des einzuschiebenden Transportgerätes genutzt werden kann, so dass sich die zweite Trageeinrichtung des einzuschiebenden Transportgerätes, an den Griffeinrichtungen der vorausbefindlichen Trageeinrichtung vorbeiführend, ganz tief in die zweite Trageeinrichtung des vorausbefindlichen Transportgeräts einschieben lässt. Gleiches gilt auch für die erste Trageeinrichtung der beiden Transportgeräte. Derart eng gestapelte Transportgeräte lassen sich daher auch kostengünstig verschicken, da der Platz- und Raumbedarf, wie bereits erwähnt, äußerst gering ist.

Die Erfindung wird anhand eines Ausführungsbeispieles näher erläutert. Es zeigt
Fig. 1 ein Transportgerät in räumlicher Darstellung sowie
Fig. 2 zwei gleiche Transportgeräte in gestapeltem Zustand.

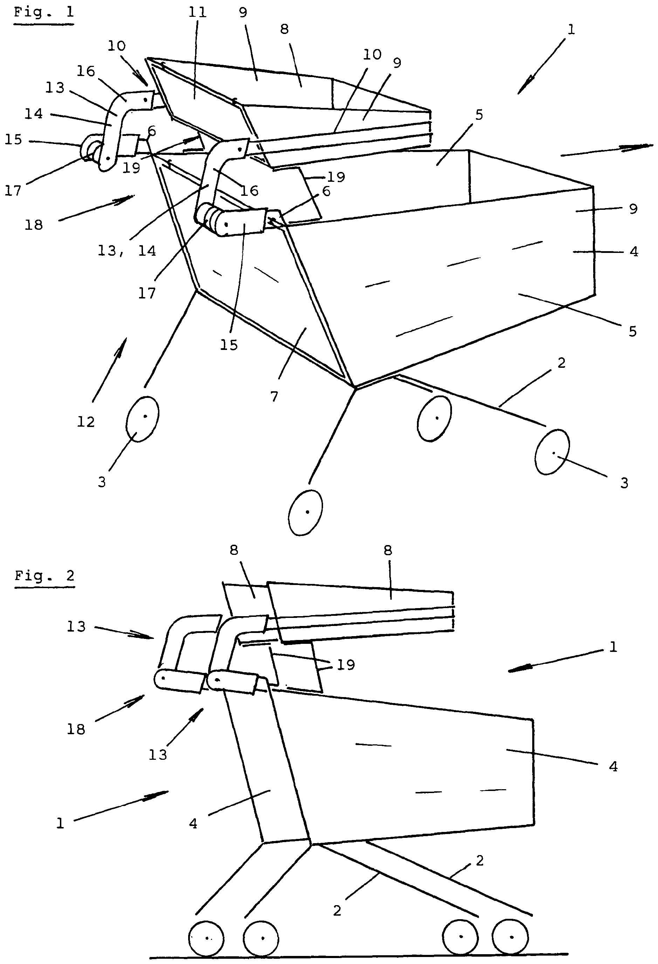

Das in Fig. 1 dargestellte Transportgerät 1 weist ein mit Rollen 3 ausgestattetes Fahrgestell 2 auf, an oder auf dem in bekannter Weise eine erste Trageeinrichtung 4 befestigt ist. Oberhalb der ersten Trageeinrichtung 4 ist eine zweite Trageeinrichtung 8 vorgesehen, die nach unten auf der ersten Trageeinrichtung 4 abgestützt ist. Zu beiden Seiten der ersten und der zweiten Trageeinrichtung 4, 8 ist je eine Griffeinrichtung 13 vorgesehen, die zum Bewegen des Transportgerätes 1 bestimmt ist. Das Fahrgestell 2 sowie die erste und zweite Trageeinrichtung 4, 8 sind so gestaltet, dass sich gleiche Transportgeräte 1 zum Zwecke der Platzersparnis ineinanderschieben lassen. Um dies zu ermöglichen, bedienen sich die eben genannten Teile und/oder Baugruppen bekannter gestalterischer und technischer Merkmale, die man von handelüblichen Einkaufswagen her kennt. Ein typisches Beispiel hierfür ist der im Dokument DE 2009 042 287 A1 beschriebene Transportwagen, der alle diese bekannten Merkmale aufweist. So können Trageeinrichtungen 4, 8 beispielsweise als konischer Korb oder als Ladeplattform gestaltet sein. Auch eine schalenartige Ausbildung ist denkbar. Alle diese Trageeinrichtungen 4, 8 sind letztendlich dazu vorgesehen, Ware, sowie handliche Güter aller Art usw. aufzunehmen, damit man diese mit dem Transportgerät 1 transportieren kann. Demnach sind unter dem Begriff "Transportgeräte" alle von Hand bewegbaren Geräte wie Einkaufswagen, Transportwagen, Gepäcktransportwagen oder auch Baumarktwagen vereint, die sich mit gleichen Wagen platzsparend stapeln lassen. Es wird nun vorgeschlagen, auf einen bisher üblichen, quer zur Schieberichtung (Pfeil) sich erstreckenden Schiebegriff zu verzichten. Aus der Zeichnung ist ersichtlich, dass zu beiden Seiten der ersten und der zweiten Trageeinrichtung 4, 8 und in deren gemeinsamen hinteren Bereich 12 jeweils eine spiegelbildlich zueinander angeordnete Griffeinrichtung 13 vorgesehen ist. Es sind, ausgehend von den beiden Seitenwänden 5, 9 der ersten und der zweiten Trageeinrichtung 4, 8, erste und zweite Befestigungsmittel 6, 10, etwa aus Draht gefertigte Schlaufen vorgesehen, an welchen die beiden Griffeinrichtungen 13 befestigt sind, was im Umkehrschluss bedeutet, dass die zweite Trageeinrichtung 8 mit Hilfe der beiden Griffeinrichtungen 13 mit der ersten Trageeinrichtung 4 verbunden ist. Ausgehend von den beiden ersten Befestigungsmitteln 6 ist also jede Griffeinrichtung 13 zusätzlich am nächstliegenden der beiden zweiten Befestigungsmittel 10 abgestützt. Dadurch wird zwischen den beiden Griffeinrichtungen 13 ein Zwischenraum 18 gebildet, der von der zweiten Trageeinrichtung 8 eines rückwärtigen Transportgerätes 1 dann genutzt wird, wenn dieses in ein vorausbefindliches Transportgerät 1 eingeschoben wird. Jede Griffeinrichtung 13 kann also, beispielsweise als Kunststoff-Formteil, einstückig gestaltet sein. Ebenso ist es möglich, jede Griffeinrichtung 13 zwei- oder mehrstückig auszubilden. Die hier gezeigte Lösung bedient sich zweier Griffeinrichtungen 13, die jeweils eine so genannte bekannte Griffkappe 15 und einen bekannten Pistolengriff 16 als miteinander verbundene Bauteile, und unter Verwendung von geeigneten Schraubmitteln, zur Bildung der beiden Griffeinrichtungen 13 benutzt werden. Bekannte Einkaufswagen verwenden solche Bauteile. Die als Griffkappen 15 bekannten Bauteile sind an den ersten (6) und die als Pistolengriffe 16 bekannten Bauteile an den zweiten Befestigungsmitteln 10 befestigt. Zwischen diesen Bauteilen kann, sofern erforderlich, jeweils ein Verbindungsmittel 17, etwa in Form eines kurzen Rohrstücks, vorgesehen sein. Jede Griffeinrichtung 13 weist somit einen Griffabschnitt 14 auf, siehe Pistolengriff 16, der zum Bewegen des Transportgeräts 1 vorgesehen ist. Die erste Trageeinrichtung 4 ist von oben betrachtet breiter ausgebildet als die zweite Trageeinrichtung 8, die üblicherweise und ebenfalls von oben betrachtet, auf der gleichen Längsachse angeordnet ist wie die erste Trageeinrichtung 4.

Ergänzend zeigt Fig. 2 zwei gleiche und platzsparend ineinander geschobene Transportgeräte 1. Die Fahrgestelle 2 der ersten Trageeinrichtungen 4 und der zweiten Trageeinrichtungen 8 sind jeweils eng ineinander geschoben. Die Griffeinrichtungen 13 behindern durch das Vorhandensein der Zwischenräume 18 diese Lage nicht. Die Rückseite sowohl der ersten (4) als auch der zweiten Trageeinrichtung 8 ist, wie bereits angedeutet, jeweils durch eine bekannte schwenkbare Rückwand 7, 11, siehe Fig. 1, gebildet. Zweck und Funktion dieser Rückwände 7, 11 sind bekannt.
Zwischen der ersten Trageeinrichtung 4 und der zweiten Trageeinrichtung 8 können nahe der beiden Griffeinrichtungen 13 zusätzlich je ein Stützteil 19 vorgesehen sein, wobei die Stützteile 19 vor allem dazu bestimmt sind, ein mögliches Schwingen der zweiten Trageeinrichtung 8 beim Gebrauch des Transportgerätes 1 zu verhindern, siehe auch Fig. 1. Die Stützteile 19 bilden demnach ebenfalls eine Verbindung zwischen der ersten Trageeinrichtung 4 und der zweiten Trageeinrichtung 8.

## Patentansprüche

1. Von Hand bewegbares, mit gleichen Geräten stapelbares Transportgerät (1), mit einer ersten Trageeinrichtung (4) und mit einer über der ersten Trageeinrichtung (4) angeordneten zweiten Trageeinrichtung (8), wobei die erste Trageeinrichtung (4) zwei Seitenwände (5) sowie eine schwenkbare Rückwand (7) und die zweite Trageeinrichtung (8) zwei Seitenwände (9) und eine schwenkbare Rückwand (11) aufweisen und wobei von oben betrachtet die erste Trageeinrichtung (4) breiter ausgebildet ist als die zweite Trageeinrichtung (8), wobei ferner die erste Trageeinrichtung (4) in ihrem hinteren Bereich (12) und zu beiden Seiten angeordnet zwei von ihren Seitenwänden (5) ausgehende erste Befestigungsmittel (6) aufweist, an denen jeweils eine Griffeinrichtung (13) zum Bewegen des Transportgerätes (1) befestist ist und die zweite Trageeinrichtung (8) ebenfalls in ihrem hinteren Bereich (12) und ebenfalls zu beiden Seiten angeordnet zwei zweite Befestigungsmittel (10) aufweist, die zum Verbinden der zweiten Trageeinrichtung (8) mit der ersten Trageinrichtung (4) bestimmt sind, wobei jede Griffeinrichtung (13) zusätzlich am nächstliegenden der beiden zweiten Befestigungsmittel (10) befestigt ist und wobei zwischen den beiden Griffeinrichtungen (13) ein Zwischenraum (18) gebildet ist, der von der zweiten Trageeinrichtung (8) eines rückwärtigen Transportgerätes (1) dann genutzt wird, wenn dieses in ein vorausbefindliches Transportgerät (1) eingeschoben wird und wobei in gestapeltem Zustand zweier Transportgeräte (1) deren erste Trageeinrichtungen (4) einerseits und deren zweite Trageeinrichtungen (8) andererseits teilweise ineinandergeschoben sind, **dadurch gekennzeichnet, dass** die zweite Trageeinrichtung (8) mit Hilfe ihrer zweiten Befestigungsmittel (10) mit den beiden Griffeinrichtungen (13) verbunden ist.

2. Transportgerät nach Anspruch 1, **dadurch gekennzeichnet, dass** durch zwei Stützteile (19) eine zusätzliche Verbindung zwischen der zweiten Trageeinrichtung (8) und der ersten Trageeinrichtung (4) gebildet ist.

3. Transportgerät nach Anspruch 1, **dadurch gekennzeichnet, dass** jede Griffeinrichtung (13) ein- oder mehrstückig gestaltet ist.

4. Transportgerät nach Anspruch 1 oder 3, **dadurch gekennzeichnet, dass** jede Griffeinrichtung (13) durch eine bekannte Griffkappe (15) und durch einen bekannten Pistolengriff (16) gebildet ist, wobei zwischen der Griffkappe (15) und dem Pistolengriff (16) wahlweise ein Verbindungsmittel (17) vorgesehen ist.

5. Transportgerät nach Anspruch 4, **dadurch gekennzeichnet, dass** die Griffkappen (15) an den ersten Befestigungsmitteln (6) und die Pistolengriffe (16) an den zweiten Befestigungsmitteln (10) befestigt sind.

6. Transportgerät nach Anspruch 1, **dadurch gekennzeichnet, dass** die ersten Befestigungsmittel (6) nach hinten über die erste Trageeinrichtung (4) und die zweiten Befestigungsmittel (10) nach hinten über die zweite Trageeinrichtung (8) hinaus vorstehen.

7. Transportgerät nach Anspruch 1, **dadurch gekennzeichnet, dass** die Griffeinrichtungen (13) spiegelbildlich angeordnet sind.

## Claims

1. Transport apparatus (1) which is movable by hand and stackable with like apparatuses, having a first carrying installation (4) and having a second carrying installation (8) which is disposed above the first carrying installation (4), wherein the first carrying installation (4) has two side walls (5) as well as a pivotable rear wall (7), and the second carrying installation (8) has two side walls (9) and a pivotable rear wall (11), and wherein, when viewed from above, the first carrying installation (4) is configured so as to be wider than the second carrying installation (8), wherein the first carrying installation (4) in the rear region (12) thereof, and disposed on both sides, furthermore has two first fastening means (6) which proceed from the side walls (5) of said first carrying installation (4) and to which one handle installation (13) for moving the transport apparatus (1) is in each case fastened, and the second carrying installation (8), likewise in the rear region (12) thereof, and likewise disposed on both sides, has two second fastening means (10) which are specified for connecting the second carrying installation (8) to the first carrying installation (4), wherein each handle installation (13) is additionally fastened to the closest of the two second fastening means (10), and wherein an intermediate space (18) which is utilized by the second carrying installation (8) of a rearward transport apparatus (1) when the latter is pushed into a transport apparatus (1) situated in front is formed between the two handle installations (13), and wherein, in the state in which two transport apparatuses (1) are stacked, the first carrying installations (4) thereof, on the one hand, and the second carrying installations (8) thereof, on the other hand, are partially pushed into one another, **characterized in that** the second carrying installation (8) with the aid of the second fastening means (10) thereof is connected to the two handle installations (13).

2. Transport apparatus according to Claim 1, **characterized in that** an additional connection between the second carrying installation (8) and the first carrying installation (4) is formed by two support parts (19).

3. Transport apparatus according to Claim 1, **characterized in that** each handle installation (13) is designed as one part or multiple parts.

4. Transport apparatus according to Claim 1 or 3, **characterized in that** each handle installation (13) is formed by a known handle cap (15) and by a known pistol grip (16), wherein connection means (17) are optionally provided between the handle cap (15) and the pistol grip (16).

5. Transport apparatus according to Claim 4, **characterized in that** the handle caps (15) are fastened to the first fastening means (6), and the pistol grips (16) are fastened to the second fastening means (10).

6. Transport apparatus according to Claim 1, **characterized in that** the first fastening means (6) project towards the rear beyond the first carrying installation (4), and the second fastening means (10) project towards the rear beyond the second carrying installation (8).

7. Transport apparatus according to Claim 1, **characterized in that** the handle installations (13) are disposed so as to be mirror-inverted.

## Revendications

1. Appareil de transport (1) pouvant être déplacé manuellement, pouvant être imbriqué avec des appareils identiques, comprenant un premier dispositif porteur (4) et un deuxième dispositif porteur (8) disposé par-dessus le premier dispositif porteur (4), le premier dispositif porteur (4) présentant deux parois latérales (5) ainsi qu'une paroi arrière pivotante (7) et le deuxième dispositif porteur (8) présentant deux parois latérales (9) et une paroi arrière pivotante (11), et, vu de dessus, le premier dispositif porteur (4) étant réalisé sous forme plus large que le deuxième dispositif porteur (8), le premier dispositif porteur (4) présentant en outre dans sa région arrière (12) et disposés des deux côtés, deux premiers moyens de fixation (6) partant de ses parois latérales (5), au niveau desquels est à chaque fois fixé un dispositif de préhension (13) pour déplacer l'appareil de transport (1) et le deuxième dispositif porteur (8) présentant deux deuxièmes moyens de fixation (10) également dans sa région arrière (12) et également disposés des deux côtés, lesquels sont prévus pour relier le deuxième dispositif porteur (8) au premier dispositif porteur (4), chaque dispositif de préhension (13) étant en outre fixé au moyen de fixation le plus proche parmi les deux deuxièmes moyens de fixation (10) et un espace intermédiaire (18) étant formé entre les deux dispositifs de préhension (13), lequel est utilisé par le deuxième dispositif porteur (8) d'un appareil de transport situé en arrière (1) lorsque celui-ci est enfoncé dans un appareil de transport situé en avant (1), et dans l'état imbriqué de deux appareils de transport (1), leurs premiers dispositifs porteurs (4) d'une part et leurs deuxièmes dispositifs porteurs (8) d'autre part étant enfoncés en partie l'un dans l'autre, **caractérisé en ce que** le deuxième dispositif porteur (8) est connecté aux deux dispositifs de préhension (13) à l'aide de ses deuxièmes moyens de fixation (10).

2. Appareil de transport selon la revendication 1, **caractérisé en ce qu'**une connexion supplémentaire entre le deuxième dispositif porteur (8) et le premier dispositif porteur (4) est formée par deux pièces de support (19).

3. Appareil de transport selon la revendication 1, **caractérisé en ce que** chaque dispositif de préhension (13) est réalisé en une ou plusieurs parties.

4. Appareil de transport selon la revendication 1 ou 3, **caractérisé en ce que** chaque dispositif de préhension (13) est formé par un embout de poignée connu (15) et par une poignée en forme de pistolet connue (16), un moyen de connexion (17) étant prévu, au choix, entre l'embout de poignée (15) et la poignée en forme de pistolet (16).

5. Appareil de transport selon la revendication 4, **caractérisé en ce que** les embouts de poignée (15) sont fixés aux premiers moyens de fixation (6) et les poignées en forme de pistolet (16) sont fixées aux deuxièmes moyens de fixation (10).

6. Appareil de transport selon la revendication 1, **caractérisé en ce que** les premiers moyens de fixation (6) font saillie vers l'arrière au-delà du premier dispositif porteur (4) et les deuxièmes moyens de fixation (10) font saillie vers l'arrière au-delà du deuxième dispositif porteur (8) .

7. Appareil de transport selon la revendication 1, **caractérisé en ce que** les dispositifs de préhension (13) sont disposés avec une symétrie spéculaire.
